(19) Europäisches Patentamt
European Patent Office
Office européen des brevets

(11) Publication number: **0 000 962**
**B1**

(12) # EUROPEAN PATENT SPECIFICATION

(45) Date of publication of patent specification: **18.11.81**

(51) Int. Cl.³: **A 01 N 53/00,**
A 01 N 37/52

(21) Application number: **78200099.6**

(22) Date of filing: **14.07.78**

(54) **Pesticidal composition and method of combating pests.**

(30) Priority: **10.08.77 GB 3352477**

(43) Date of publication of application:
**07.03.79 Bulletin 79/5**

(45) Publication of the grant of the European patent:
**18.11.81 Bulletin 81/46**

(84) Designated Contracting States:
**CH DE FR GB NL**

(56) References cited:
FR - A - 2 340 925
NL - A - 70 18036
NL - A - 73 07130
NL - A - 76 08375

(73) Proprietor: **SHELL INTERNATIONALE RESEARCH MAATSCHAPPIJ B.V.**
**Carel van Bylandtlaan 30**
**NL-2596 HR DEN HAAG (NL)**

(72) Inventor: **Badmin, John Stewart**
**26, Arundel Avenue**
**Sittingbourne Kent (GB)**
Inventor: **Knight, Robert John**
**6 The Rise Singleton**
**Ashford Kent (GB)**

(74) Representative: **Keuzenkamp, Abraham et al,**
**P.O. Box 302**
**NL-2501 CH Den Haag (NL)**

**EP 0 000 962 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Pesticidal composition and method of combating pests

This invention relates to a pesticidal composition and to a method of combating pests.

The Applicant has found that a composition including the known acaricide, N,N-di(2,4-xylyliminomethyl)-methylamine and certain insecticides possess synergistic activity with respect to acarid pests; that is to say, the activity of the combination of the two pesticides produces a more-than-additive pesticidal effect.

Accordingly, the present invention provides a pesticidal composition which comprises N,N-di-(2,4-xylyliminomethyl)methylamine (hereinafter referred to as "amitraz") characterized in that the composition includes insecticide having the general formula:

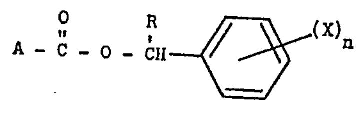

(I)

wherein A is an optionally-substituted aralkyl, alkyl or cycloalkyl group, R is hydrogen, cyano or ethynyl, X is alkyl, alkenyl, aralkyl or aryloxy, and n is 1 to 5.

Generally speaking, an alkyl, cycloalkyl or alkenyl group represented by A or X preferably contains up to 6 carbon atoms and an aralkyl or aryloxy group represented by A or X preferably contains up to 10 carbon atoms.

It should be noted that the insecticide I can exist in the form of optical isomers or cis-trans-isomers and in the composition according to the invention as individual isomer or mixture of isomers including racemates may be employed.

Preferably, A represents an optimally-substituted aralkyl group in general formula I. Especially preferred compounds of the general formula I are those in which A represents a substituted benzyl group of the general formula:

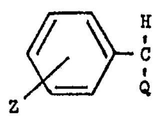

wherein Z represents a halogen, preferably a chlorine, atom, or an alkoxy group having 1 to 4 carbon atoms, for example a methoxy group, and Q represents an alkyl group having from 1 to 6 carbon atoms, especially a branched-chain group, for example an isopropyl group. The most preferred compounds of the general formula I are those wherein A represents an alpha-isopropyl-4-chlorobenzyl group, R represents a hydrogen atom or a cyano group, n is 1, and X represents a 3-phenoxy group, for example alpha-cyano-3-phenoxybenzyl 2-(4-chlorophenyl)-3-methylbutanoate.

If, however, A represents an optionally-substituted cycloalkyl group in general formula I, the preferred compounds of this type are those wherein A represents a cyclopropyl group of formula:

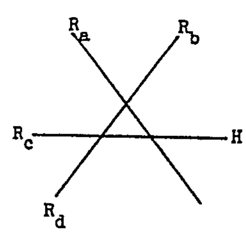

wherein $R_a$ and $R_b$ each individually represent an alkyl group having from 1 to 6 carbon atoms, especially methyl or a halogen, especially chlorine, bromine or fluorine atom; or $R_a$ and $R_b$ together represent an alkylene group having from 2 to 6, especially 3, carbon atoms; or $R_a$ represents a hydrogen atom and $R_b$ represents an alkenyl group having from 2 to 6 carbon atoms, especially an isobutenyl group, or a haloalkenyl group having from 2 to 6 carbon atoms and from 1 to 3 chlorine or bromine atoms, especially a mono- or dichlorovinyl group; $R_c$ and $R_d$ both represent an alkyl group having 1 to 6 carbon atoms, especially a methyl group, or $R_c$ and $R_d$ together represent an alkylene group having from 2 to 6, especially 3, carbon atoms. Thus, for example, A may represent a 2,2,3,3-tetramethylcyclopropyl group while R represents a hydrogen atom or a cyano group, n is 1 and X is 3-phenoxy.

The mixture of amitraz and the insecticide (I) not only produces a pesticide having a markedly wider spectrum of activity than the insecticide (I) or the amitraz alone, but also produces a surprising

synergistic effect with respect to acarids. e.g., glasshouse red spider mite. *Tetranychus urticae*. The mixture also possesses useful properties with respect to the eggs of lepidopterous and acharine pests; it has uses in the agrochemical and animal health fields.

The weight ratio of the insecticide (I) to amitraz may be in the range 5:1 to 1:50.

The pesticidal composition according to the invention preferably also comprises a carrier, especially at least two carriers, at least one of which is a surface-active agent.

A carrier may be a solid or liquid material, which may be inorganic or organic and of synthetic or natural origin. Typical solid carriers include natural and synthetic clays and silicates, for example, natural silicas, for example diatomaceous earths, and aluminium silicates, for example kaolinites, montmorillonites and micas. Typical liquid carriers are ketones, for example methylcyclohexanone, aromatic hydrocarbons, for example methylnaphthalenes, petroleum fractions, for example petroleum xylenes and light mineral oils, and chlorinated hydrocarbons, for example carbon tetrachloride. Mixtures of liquids are often suitable.

One or more surface-active agents and/or stickers can be included in the composition. A surface-active agent may be an emulsifying agent or a dispersing agent or a wetting agent; it may be non-ionic or ionic. Any of the surface-active agents usually applied in formulating insecticides may be used. Examples of suitable surface-active agents are the sodium and calcium salts of polyacrylic acids and lignin sulphonic acids; the condensation products of fatty acids of aliphatic amines or amides containing at least 12 carbon atoms in the molecule with ethylene oxide and/or propylene oxide; fatty acid esters of glycerol, sorbitan, sucrose or pentaerythritol, condensates of these with ethylene oxide and/or propylene oxide; condensation products of fatty alcohols or alkyl phenols, for example *p*-octylphenol or *p*-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates, such as sodium dodecylbenzene sulphonate; and polymers of ethylene oxide and copolymers of ethylene oxide and propylene oxide.

The composition of the invention may for example be formulated as a wettable powder, microcapsules, a dust, granules, a solution, an emulsifiable concentrate, an emulsion, a suspension concentrate or an aerosol. The composition may have controlled release properties, or may be suitable for use as a bait.

Wettable powders usually contain 25, 50 or 75%w of active ingredient and may contain, in addition to inert solid material, 3—10% w of a dispersing agent and, where necessary, 0—10%w of a stabilizer, a penetrant and/or a sticker. A dust is usually formulated as a dust concentrate having a composition similar to that of a wettable powder but without a dispersant, and is diluted in the field with further solid carrier to give a composition usually containing $\frac{1}{2}$—10%w of active ingredient.

Granules usually have a size in the range of from 10 to 100 BS mesh (1.676—0.152 mm) and may be manufactured by agglomeration or impregnation techniques. Generally, granules will contain $\frac{1}{2}$—25%w active ingredient and 0—10%w of additives, for example a stabilizer, slow-release modifier and/or a binding agent.

Emulsifiable concentrates usually contain, in addition to a solvent, and, when necessary, cosolvent, 10—50%w/v active ingredient, 2—20%w/v emulsifier and 0—20%w/v of other additives, for example a stabilizer, a penetrant and/or a corrosion inhibitor. A suspension concentrate is a stable, non-sedimenting, flowable product and usually contains 10—75%w active ingredient, 0.5—15%w of dispersing agent, 0.1—10%w of suspending agent, for example protective colloid and for a thixotropic agent, and 0—10%w of other additives including, for example, a defoamer, a corrosion inhibitor, a stabilizer, a penetrant and/or a sticker, and as dispersant, water or an organic liquid in which the active ingredient is substantially insoluble; certain organic additives and/or inorganic salts may be dissolved in the dispersant to assist in preventing sedimentation or as anti-freeze for water.

The aqueous dispersions and emulsions formed by diluting a wettable powder or an emulsifiable concentrate of the invention with water, also lie within the scope of the present invention. Such dispersions and emulsions may be of the water-in-oil or of the oil-in-water type, and may have a thick "mayonnaise"-like consistency.

A composition of the invention may also contain other ingredients, for example, one or more other compounds possessing pesticidal, herbicidal or fungicidal properties, or attractants, for example pheromones or food ingredients, for use in baits and trap formulations.

The invention also includes a method of combating pests at a locus characterized in that a pesticidal composition according to the invention is applied to the locus.

The invention is further illustrated by the following Example, in which the joint action of two pesticides was analyzed according to the method of Yun-Pei Sun and E. R. Johnson, Journal of Economic Entomology, 1960, Volume 53, No. 5, pp. 887—892.

Thus, the joint action of two pesticides was analyzed by determining the actual toxicity indices of the components and of mixtures of the compounds by reference to dosage-mortality curves. the theoretical toxicity of the mixture is equal to the sum over both components of the percentage of each

individual compound multiplied by its respective toxicity index. Therefore, the joint toxicity or *co-toxicity coefficient of a mixture*

$$= \frac{\text{Actual toxicity index of a mixture}}{\text{Theoretical toxicity index of a mixture}} \times 100$$

A coefficient of a mixture near 100 indicates probability of similar action by the two pesticides; independent action usually should give a coefficient less than 100, while a coefficient significantly above 100 strongly indicates synergism.

The compounds tested in the Example are shown below.

*Amitraz*

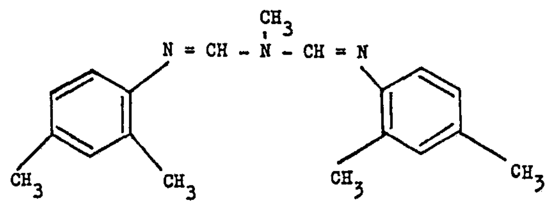

*Compound Y*

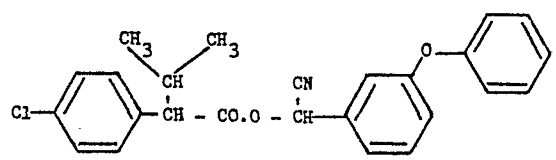

Example

*Activity of insecticide Y/Amitraz mixture against Tetranychus urticae* (glasshouse red spider mite)

The acaricidal activity of amitraz, compound Y and their mixtures was assessed by the following method.

The compounds and mixtures were formulated as solutions or suspensions in water containing 20% by weight of acetone and 0.05% by weight of Triton X—100 (Trade Mark) as wetting agent. The formulations contained 0.4% by weight of the compound or mixture to be tested and were diluted to produce formulations containing various concentrations. Leaf discs cut from French bean plants were sprayed with the formulations and left for $\frac{1}{2}$ to 1 hour drying period. Each leaf disc was then inoculated with 10 red spider mites and mortality counts made 24 hours after inoculation. From these results the $LC_{50}$'s (the concentration by weight of active material in the spray required to kill 50% of the mite population) could be calculated.

The toxicity indices of the compounds and the mixtures were calculated using the following formula:

$$\text{Toxicity Index} = \frac{LC_{50} \text{ of amitraz}}{LC_{50} \text{ of compound or mixture}}$$

The coefficient of cotoxicities were then calculated according to the method described above. The results are shown in the following Table.

TABLE

Activity against the Glasshouse Red Spider Mite *(Tetranychus Urticae)*

| Treatment | Replicates | | Coefficient of cotoxicity Replicates | |
|---|---|---|---|---|
| | 1 | 2 | 1 | 2 |
| Amitraz | 0.12 | 0.14 | – | – |
| Compound Y | 0.40 | 0.36 | – | – |
| Compound Y + Amitraz (2 : 1 ratio) | 0.17 | 0.17 | 133 | 141 |

It will be seen that the coefficients of cotoxicity are both in excess of 100 and clearly demonstrate the synergistic effect of the amitraz/insecticide Y mixture.

**Claims**

1. A pesticidal composition which comprises N,N-di-(2,4-xylyliminomethyl)-methylamine, characterized in that the composition includes an insecticide having the general formula:

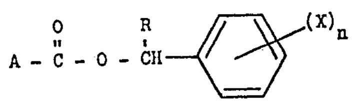

(I)

wherein A is an optionally-substituted aralkyl, alkyl or cycloalkyl group, R is hydrogen, cyano or ethynyl; X is alkyl, alkenyl, aralkyl or aryloxy and n is 1 to 5.

2. A composition according to claim 1, characterized in that in the compound of the general formula I, any alkyl, cycloalkyl or alkenyl group represented by A or X has up to 6 carbon atoms, and any aralkyl or aryloxy group represented by A or X has up to 10 carbon atoms.

3. A composition according to claim 1 or claim 2, characterized in that A represents an optionally-substituted aralkyl group.

4. A composition according to claim 3, characterized in that A represents a substituted benzyl group of the general formula:

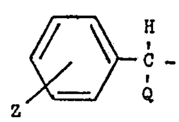

wherein Z represents a halogen atom or an alkoxy group having from 1 to 4 carbon atoms, and Q represents an alkyl group having from 1 to 6 carbon atoms.

5. A composition according to claim 4, characterized in that A represents an alpha-isopropyl-4-chlorobenzyl group, R represents a hydrogen atom or a cyano group, n represents 1 and X represents a 3-phenoxy group.

6. A composition according to claim 5, characterized in that the compound of the general formula I is alpha-cyano-3-phenoxy-benzyl 2-(4-chlorophenyl)-3-methylbutanoate.

7. A composition according to claim 1 or claim 2, characterized in that A represents a cyclopropyl group of formula:

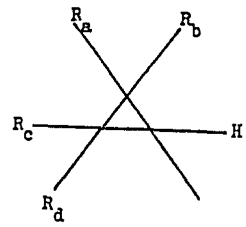

wherein $R_a$ and $R_b$ each individually represent an alkyl group having from 1 to 6 carbon atoms, or a halogen atom; or $R_a$ and $R_b$ together represent an alkylene group having from 2 to 6 carbon atoms; or $R_a$ represents a hydrogen atom and $R_b$ represents an alkenyl group having from 2 to 6 carbon atoms and from 1 to 3 chlorine or bromine atoms; $R_c$ and $R_d$ both represent an alkyl group having 1 to 6 carbon atoms, or $R_c$ and $R_d$ together represent an alkylene group having from 2 to 6 carbon atoms.

8. A method of combating pests at a locus, characterized in that a composition as claimed in any one of claims 1 to 7 is applied to the locus.

## Patentansprüche

1. Pesticides Mittel, enthaltend N,N-Di(2,4-xylyliminomethyl)methylamin, dadurch gekennzeichnet, dass es ein Insekticid der allgemeinen Formel:

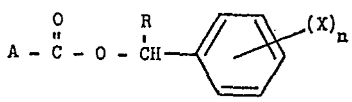

(I)

enthält in der A eine, gegebenenfalls substituierte, Aralkyl-, Alkyl- oder Cycloalkylgruppe, R ein Wasserstoffatom, eine Cyano- oder Äthinylgruppe, X eine Alkyl-, Alkenyl-, Aralkyl- oder Aryloxygruppe und n 1 bis 5 bedeutet.

2. Mittel nach Anspruch 1, dadurch gekennzeichnet, dass bei der Verbindung der allgemeinen Formel I die Alkyl-, Cycloalkyl- oder Alkenylgruppen bei A oder X bis zu 6 Kohlenstoffatome enthalten und die Aralkyl- oder Aryloxygruppen bei A oder X bis zu 10 Kohlenstoffatomen enthalten.

3. Mittel nach Anspruch 1 oder 2, dadurch gekennzeichnet, dass A eine, gegebenenfalls substituierte, Aralkylgruppe bedeutet.

4. Mittel nach Anspruch 3, dadurch gekennzeichnet, dass A eine substituierte Benzylgruppe bedeutet, der allgemeinen Formel:

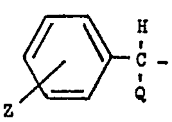

in der Z ein Halogenatom oder eine Alkoxygruppe mit 1 bis 4 Kohlenstoffatomen und Q eine Alkylgruppe mit 1 bis 6 Kohlenstoffatomen bedeutet.

5. Mittel nach Anspruch 4, dadurch gekennzeichnet, dass A eine $\alpha$-Isopropyl-4-chlorbenzylgruppe, R ein Wasserstoffatom oder eine Cyanogruppe, n 1 und X eine 3-Phenoxygruppe bedeutet.

6. Mittel nach Anspruch 5, dadurch gekennzeichnet, dass die Verbindung der allgemeinen Formel I $\alpha$-Cyano-3-phenoxybenzyl-2-(4-chlorphenyl)-3-methylbutanoat ist.

7. Mittel nach Anspruch 1 oder 2, dadurch gekennzeichnet, dass A eine Cyclopropylgruppe der Formel:

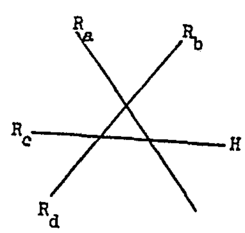

bedeutet, wobei $R_a$ and $R_b$ jeweils einzeln eine Alkylgruppe mit 1 bis 6 Kohlenstoffatomen oder ein Halogenatom bedeuten, oder $R_a$ und $R_b$ zusammen eine Alkylengruppe mit 2 bis 6 Kohlenstoffatomen oder $R_a$ ein Wasserstoffatom und $R_b$ eine Alkenylgruppe mit 2 bis 6 Kohlenstoffatomen und 1 bis 3 Chlor- oder Bromatomen bedeuten, $R_c$ und $R_d$ jeweils eine Alkylgruppe mit 1 bis 6 Kohlenstoffatomen, oder $R_c$ und $R_d$ zusammen eine Alkylengruppe mit 2 bis 6 Kohlenstoffatomen bedeuten.

8. Verfahren zur Bekämpfung von Schädlingen an einer Stelle, dadurch gekennzeichnet, dass man ein Mittel nach einem der Ansprüche 1 bis 7 auf die Stelle aufbringt.

## Revendications

1. Composition pesticide qui comprend de la N,N-di(2,4-xylyl iminométhyl)-méthylamine, caractérisée en ce que la composition comprend un insecticide ayant la formule générale:

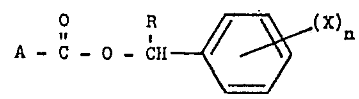

(I)

dans laquelle A est un groupe aralkyl, alkyl ou cycloalkyle éventuellement substitué, R est un atome d'hydrogène ou un radical cyano ou éthynyl; X est un groupe alkyl, alcényl, aralkyl ou aryloxy et n est un entier de 1 à 5.

2. Composition selon la revendication 1, caractérisée en ce que dans le composé de formule générale I, tout groupe alkyl, cycloalkyl ou alcényl représenté par A ou X ou jusqu'à 6 atomes de carbone, et en ce que tout groupe aralkyl ou aryloxy représenté par A ou X a jusqu'à 10 atomes de carbone.

3. Composition selon la revendication 1 ou 2, caractérisée en ce que A représente un groupe aralkyl éventuellement substitué.

4. Composition selon la revendication 3, caractérisée en ce que A représente un groupe benzyle substitué de formule générale:

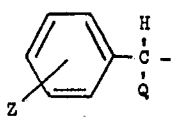

dans laquelle Z représente un atome d'halogène ou un groupe alcoxy ayant de 1 à 4 atomes de carbone et Q représente un groupe alkyle ayant de 1 à 6 atomes de carbone.

5. Composition selon la revendication 4, caractérisée en ce que A représente un groupe alpha-isopropyl-4-chlorobenzyle, R représente un atome d'hydrogène ou un groupe cyano, n représente 1 et X représente un groupe 3-phénoxy.

6. Composition selon la revendication 5, caractérisée en ce que le composé de formule générale I est le alpha-cyano-3-phénoxy-benzyl-2-(4-chlorophényl)-3-méthylbutanoate.

7. Composition selon la revendication 1 ou 2, caractérisé en ce que A représente un groupe cyclopropyl de formule:

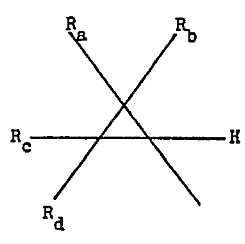

dans laquelle $R_a$ et $R_b$ représentent chacun individuellement un groupe alkyl ayant de 1 à 6 atomes de carbone ou un atome d'halogène; ou $R_a$ et $R_b$ représentent ensemble un groupe alkylène ayant de 2 à 6 atomes de carbone; ou $R_a$ représente un atome d'hydrogène et $R_b$ représente un groupe alcényl ayant de 2 à 6 atomes de carbone et de 1 à 3 atomes de chlore ou de brome; $R_c$ et $R_d$ représentent ensemble un groupe alkyl ayant de 1 à 6 atomes de carbone; ou $R_c$ et $R_d$ représentent ensemble un groupe alkylène ayant de 2 à 6 atomes de carbone.

8. Procédé pour détruire les organismes nuisibles en un lieu, caractérisé en ce qu'on applique en ce lieu une composition selon l'une des revendications 1 à 7.